**Europäisches Patentamt**

**European Patent Office**

**Office européen des brevets**

(11) Veröffentlichungsnummer : **0 406 899 B1**

(12) **EUROPÄISCHE PATENTSCHRIFT**

(45) Veröffentlichungstag der Patentschrift :
**15.04.92 Patentblatt 92/16**

(21) Anmeldenummer : **90112961.9**

(22) Anmeldetag : **06.07.90**

(51) Int. Cl.⁵ : **A01J 25/11, A01J 25/12, A01J 25/15**

(54) **Vorrichtung zum flüssigkeitsgehaltverringernden Zusammenpressen von Käserohmasse bei der Käseherstellung.**

(30) Priorität : **07.07.89 CH 2536/89**

(43) Veröffentlichungstag der Anmeldung :
**09.01.91 Patentblatt 91/02**

(45) Bekanntmachung des Hinweises auf die
Patenterteilung :
**15.04.92 Patentblatt 92/16**

(84) Benannte Vertragsstaaten :
**AT BE CH DE DK FR IT LI NL SE**

(56) Entgegenhaltungen :
**CH-A- 295 376**
**DE-A- 3 229 241**

(56) Entgegenhaltungen :
**DE-B- 1 150 239**
**FR-A- 1 309 324**
**NL-A- 7 503 378**
**US-A- 4 045 152**

(73) Patentinhaber : **KALT SÖHNE AG**
**Letziwiesstrasse 8**
**CH-9235 Lütisburg (CH)**

(72) Erfinder : **Kalt, Franz**
**Steig 893**
**CH-9235 Lütisburg (CH)**

(74) Vertreter : **Klunker . Schmitt-Nilson . Hirsch**
**Winzererstrasse 106**
**W-8000 München 40 (DE)**

## Beschreibung

Die Erfindung bezieht sich auf eine Vorrichtung zum flüssigkeitsgehaltverringernden Zusammenpressen von Käserohmasse bei der Käseherstellung, mit:

(a) einer in Draufsicht im wesentlichen rechteckigen, oben offenen Wanne;

(b) einer Reihe von in Draufsicht im wesentlichen rechteckigen, oben offenen Kassetten, die sich jeweils in Querrichtung der Wanne erstreckend nebeneinander in der Wanne angeordnet sind;

(c) Formen zur Aufnahme der zu pressenden Käserohmasse, die jeweils reihenartig in den Kassetten angeordnet sind; und

(d) einem Preßkopf, der eine Mehrzahl von auf die Formen ausgerichteten Preßstempeln zum Pressen der Käserohmasse in den Formen aufweist.

Bei bisherigen bekannten Vorrichtungen dieser Art waren die Kassetten mit gewissem gegenseitigen Abstand zwischen ihren äußeren Längsseiten in der Wanne angeordnet. Um zu verhindern, daß Käserohmasse insbesondere beim Füllen der Formen in die Zwischenräumen zwischen den Kassetten gelangt, waren Bleche zum Abdecken dieser Zwischenräume vorgesehen. Diese Bleche, die groß, schwer und sperrig sind, mußten mit zwei Personen vor dem Einfüllen von Käserohmasse in die Formen montiert werden, mußten nach dem Einfüllen der Käserohmasse oder nach dem Pressen der Käserohmasse demontiert werden und mußten vor der erneuten Verwendung umständlich gereinigt werden. Selbst mit diesen Blechen (die auch Einschwemmbleche genannt werden, weil man die Gesamtvorrichtung häufig auch Einschwemmpresse nennt) läßt sich nicht ausreichend sicher verhindern, daß Käserohmasse in die Zwischenräume zwischen den Kassetten gelangt und von dort mühsam wieder entfernt werden muß.

Der Erfindung liegt die Aufgabe zugrunde, eine Vorrichtung der eingangs genannten Art mit vollständigerem und bequemer handhabbarem Verschluß der Kassettenzwischenräume zu schaffen.

Zur Lösung dieser Aufgabe ist die Vorrichtung erfindungsgemäß dadurch gekennzeichnet, daß

(e) die Kassetten im oberen Bereich ihrer Längsseite eine bei gegenseitigem Kontakt spaltminimierende Randausbildung haben;

(f) eine mechanisierte Einrichtung zum Zusammenschieben der Kassetten in Längsrichtung der Wanne zum gegenseitigen Kontakt der Kassettenlängsränder vorgesehen ist; und

(g) die zwei in Längsrichtung der Wanne verlaufenden Längsspalte zwischen den Querseiten der Kassetten und den Längsseiten der Wanne durch Längsleisten im wesentlichen abgedeckt sind.

Der verbesserte Verschluß der Kassettenzwischenräume wird also durch eine quasi-abdichtende Ausbildung der oberen Kassettenlängsränder erreicht, wobei die Zusammenschiebeinrichtung den Betrieb der Vorrichtung erleichtert und zur Sicherstellung der Verschlußwirkung beiträgt. Die Längsleisten, die über die Gesamtlänge der Wanne durchgehen können oder aus mehreren gesonderten Längsleistenabschnitten bestehen können, sind leicht zu hantieren. Sie sind auch weniger der Kontamination mit Käserohmasse ausgesetzt als die Bereiche zwischen den benachbarten Kassetten. Es müssen keine schweren Einschwemmbleche mehr umständlich hantiert und gereinigt werden.

Die erfindungsgemäße Vorrichtung wird, insoweit analog wie die geschilderte bekannte Vorrichtung, in der Regel so betrieben, daß nach Anordnen der Kassetten in der Wanne und der Formen in den Kassetten Käserohmasse von oben her in die Formen eingefüllt wird. Die Käserohmasse ist beispielsweise Gallerte, die in einem zur Eindickung von Milch dienenden Kessel gewonnen worden ist. Die Gallerte läßt sich nach Abzug der Molke beispielsweise über Verteilrohre mittels Pumpen in die Formen einbringen. Man kann aber auch so arbeiten, daß die Gallerte nach Abzug der Molke zerstückelt wird und der sich dadurch ergebende sogenannte Käsebruch auf irgendeine geeignete Weise in die Formen eingebracht wird. Dann wird die Käserohmasse in den Formen mittels der Preßstempel zusammengepreßt, wodurch weitere Molke aus der Käserohmasse entfernt wird und der Formeninhalt eine einheitliche, zusammenhängende Konsistenz erhält. Die Vorrichtung kann so gebaut und/oder betrieben werden, daß die Formen für sich oder mitsamt der Kassetten, in denen sie angeordnet sind, einfach oder mehrfach um 180° gewendet und dann von der anderen Seite her pressend auf den Formeninhalt eingewirkt wird, ehe der gepreßte Formeninhalt aus den Formen entnommen wird.

Eine erste bevorzugte konkrete Ausführungsmöglichkeit besteht darin, daß die Kassetten in ihrem oberen Bereich mindestens entlang der Längsränder mit fest angebrachten, leistenartigen Teilen versehen sind, die jeweils am äußeren Längsrand eine derartige Oberflächenbeschaffenheit und Formgenauigkeit haben, daß sich die beschriebene Spaltminimierung zwischen den jeweils benachbarten Kassetten ergibt. Besonders geeignet und bevorzugt sind leistenartige Bauteile aus Kunststoff, die entsprechend formgenau hergestellt und/oder nachträglich an der Längsaußenfläche bearbeitet sind, beispielsweise durch Fräsen oder Schleifen. Besonders praktisch ist eine Ausbildung als im wesentlichen hohlrechteckiger, fest an der Kassette angebrachter Rahmen, der somit auch den oberen Bereich der Querseiten der Kassette überdeckt. Eine alternative bevorzugte Möglichkeit besteht darin, daß die Längswände der Kassetten in ihrem oberen Bereich jeweils einen im Querschnitt im wesentlichen U-förmig abgebogenen Fortsatz aufweisen, wobei die Fortsätze benachbarter Kassetten in einem labyrinthdichtungartigen Eingriff miteinander stehen.

Die Längsleisten für die zwei Längsspalte zwischen den Querseiten der Kassetten und der Wanne sind vorzugsweise von oben aufgesetzte Kunststoffleisten oder von oben aufgesetzte profilierte Blechleisten.

Als Zusammenschiebeinrichtung sind vorzugsweise eine oder nebeneinander mehrere, pneumatische oder hydraulische Zylinder-Kolbeneinheiten vorgesehen, um die Kassetten in Wannenlängsrichtung gegeneinander zu drücken.

Bevorzugte Ausgestaltungen der Erfindung sind in den Ansprüchen 2 bis 9 angegeben und sind entweder weiter vorn bereits angesprochen oder werden nachfolgend noch genauer erläutert.

Die Erfindung und Ausgestaltungen der Erfindung werden im folgenden anhand von Ausführungsbeispielen noch näher erläutert. Es zeigt:

Fig. 1 eine horizontale Ansicht einer erfindungsgemäßen Vorrichtung bzw. Einschwemmpresse, gesehen in Längserstreckungsrichtung der Kassetten;

Fig. 2 einen Querschnitt der Vorrichtung von Fig. 1 entsprechend A-A in Fig. 1, so daß die Blickrichtung in Längsrichtung der Wanne ist;

Fig. 3 eine Draufsicht auf zwei benachbarte Kassetten mit darin angeordneten Formen;

Fig. 4 einen Querschnitt einer Kassette in Querrichtung der Wanne, wobei man Längsleisten erkennt;

Fig. 5 einen Längsschnitt in Längsrichtung der Wanne durch Teilbereiche zweier benachbarter Kassetten zur Veranschaulichung eines zweiten Ausführungsbeispiels;

Fig. 6 einen Querschnitt in Querrichtung der Wanne durch Teilbereiche einer Kassette und der Wanne, wobei man eine Längsleiste alternativer Ausführungsform erkennt.

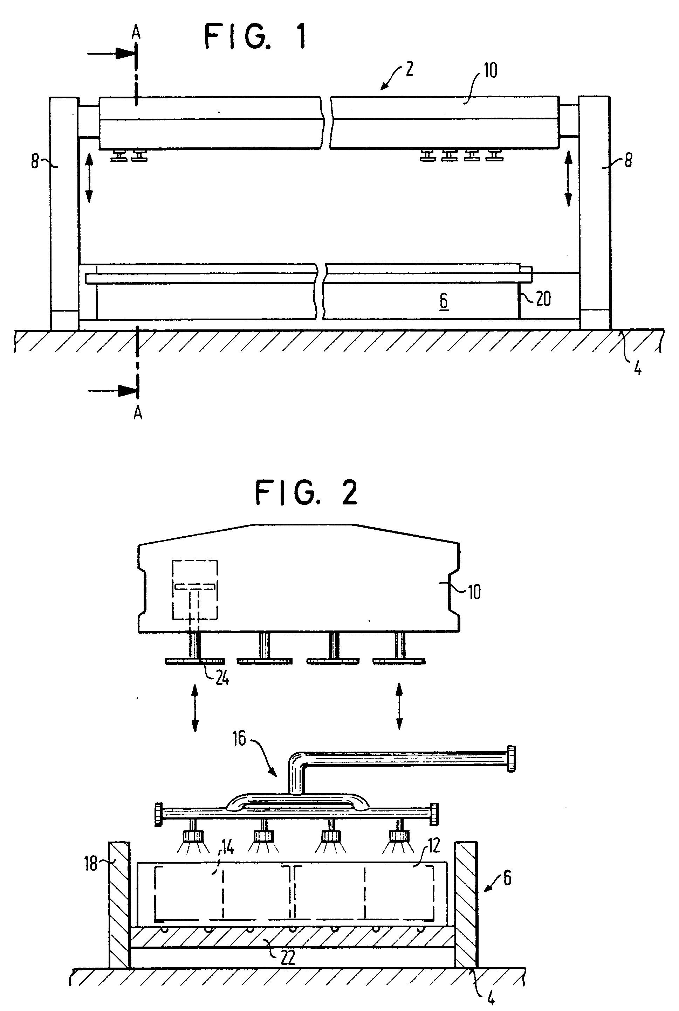

Die in Fig. 1 und 2 insgesamt gezeichnete Vorrichtung 2 besteht zur Hauptsache aus einer auf dem Aufstellungsboden ruhenden, kräftig gebauten, in Draufsicht im wesentlichen rechteckigen Wanne 6, in Abstand von den Querseiten der Wanne 6 stehenden Säulen 8, einem von den Säulen 8 in Vertikalrichtung verschiebbar getragenen Preßkopf 10, einer Reihe von in der Wanne 6 angeordneten Kassetten 12, und Formen 14, die innerhalb der Kassetten 12 angeordnet sind. Außerdem erkennt man in Fig. 2 ein Rohrverteilsystem 16 zum Einbringen von Käserohmasse in die Formen 14; das Rohrverteilsystem 16 ist in nicht eingezeichneter Weise in Längsrichtung der Vorrichtung 2 verfahrbar, damit von ihm sämtliche Formen 14 erreicht werden.

Die Wanne 6 besteht im wesentlichen aus zwei aufrechten Längswänden 18, zwei aufrechten Querwänden 20 und einer Bodenplatte 22. Die oben offenen Kassetten 12 sind in Draufsicht im wesentlichen rechteckig und erstrecken sich mit ihrer Längsrichtung in Querrichtung der Wanne 6. Die Querseiten der Kassetten 12 befinden sich in der Nähe der Längswände 18 der Wanne 6. Eine Reihe von Kassetten 12, jeweils mit ihren Längsseiten benachbart, ist längs der Wanne 6 angeordnet. In jeder Kassette 12 sind vier Formen 14 angeordnet, und zwar in Längsrichtung der betreffenden Kassette 12 nebeneinander.

Der Preßkopf 10 hat Preßstempel 24, deren Zahl und Anordnung den Formen 14 entspricht. Die Preßstempel 24 sind in Vertikalrichtung relativ zu dem Preßkopf 10 mit Fluiddruck ausfahrbar, so daß auf diese Weise auf die Käserohmasse in den Formen 14 eine Zusammenpreßwirkung ausgeübt werden kann. Nachdem die Formen 14 mit Käserohmasse gefüllt worden sind, kann der gesamte Preßkopf längs der Säulen 8 in die Nähe der Wannenoberseite abgesenkt werden. Der eigentliche Preßvorgang erfolgt dann durch Ausfahren der Preßstempel 24.

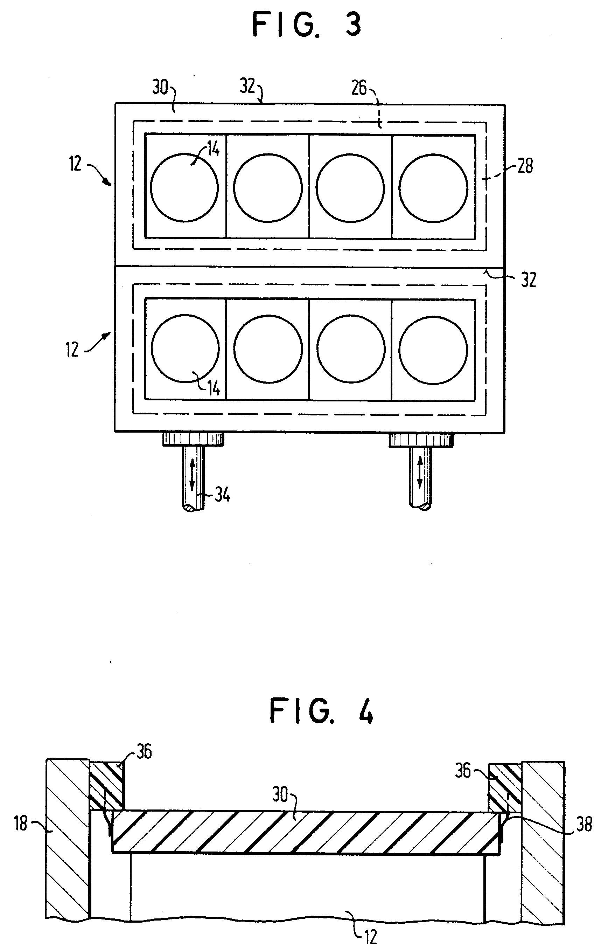

Fig. 3 zeigt in einer ersten Ausführungsform eine spaltminimierende Längsrandausbildung der Kassetten 12. Die Längswände 26 und die Querwände 28 der Kassetten sind mit gestrichelten Linien eingezeichnet. Auf die Oberseiten dieser Wände 26, 28 ist ein hohlrechteckiger Rahmen 30 aus Kunststoff aufgesetzt und permanent befestigt. Der Rahmen 30 hat in Vertikalrichtung gemessen überall gleiche Stärke, so daß er als plattenförmig bezeichnet werden kann. Die Innenkontur des Rahmens 30 ist so, daß die Formen 14 aus der betreffenden Kassette 12 herausgenommen werden können und daß freier Zugang für die Preßstempel 24 zu den Formhohlräumen besteht. Die äußeren Längsränder 32 der Rahmen 30 sind plan gefräst. Auf diese Weise ergibt sich ein praktisch dichter gegenseitiger Kontakt benachbarter Kassetten 12 an diesen äußeren Längsrändern 32. Außerdem sind in Fig. 3 schematisch zwei nebeneinander angeordnete Zylinder-Kolben-Einheiten 34 eingezeichnet, mit denen auf die letzte Kassette 12 an einem Ende der Kassettenreihe ein Druck in Längsrichtung der Wanne 6 ausgeübt werden kann. Durch diesen Druck wird die gesamte Kassettenreihe zusammengeschoben und gegen einen nicht gezeichneten Anschlag am anderen Ende der Kassettenreihe geschoben, wobei die längsseitigen Zwischenräume zwischen den Kassetten 12 oben praktisch dicht geschlossen sind.

In Fig. 4 sind Längsleisten 36 mit im wesentlichen rechteckigem Querschnitt aus Kunststoff eingezeichnet, die sich an jeder Längsseite der Wanne 6 über die Gesamtlänge der Kassettenreihe erstrecken. Die Längsleisten 36 ruhen mit ihrer Unterseite auf den Oberseiten der Rahmen 30 auf. Die Längsleisten 36 sind so breit, daß sie außenseitig jeweils an der Innenseite der betreffenden Längswand 18 der Wanne 6 anliegen. Unten ragen beispielsweise federnde Metallbügel 38 aus den Längsleisten 36 heraus, die außenseitig an den Querseiten der Rahmen 30 anliegen. Auf diese Weise werden die Längsleisten 36 federnd nach außen gegen die Wanne 6 gedrückt.

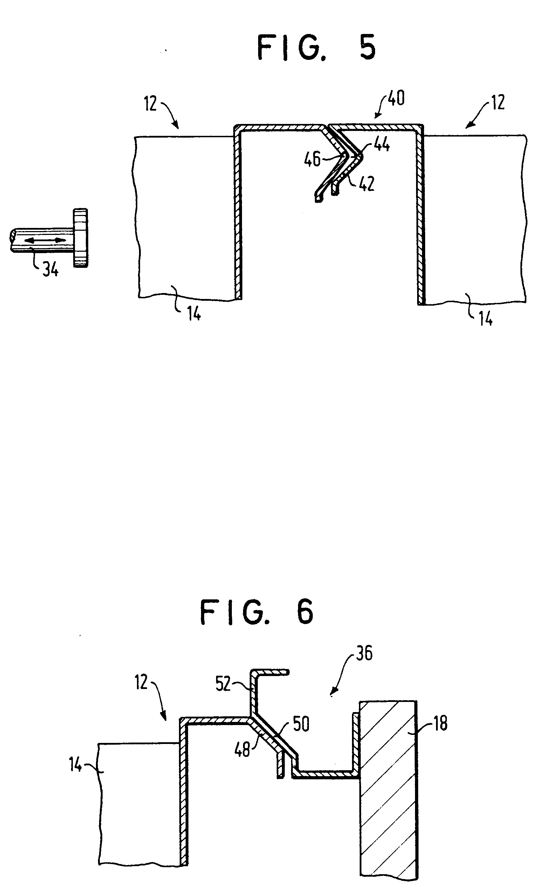

Bei der in Fig. 5 gezeichneten Ausführungsform ist kein Kunststoffrahmen 30 vorgesehen. Statt dessen sind die Längswände 26 der Kassetten 12 in ihrem oberen Bereich mit - grob gesprochen - U-förmigem Querschnitt nach außen und dann nach unten abgebogen, so daß ein Fortsatz 40 entsteht. Der sich nach unten erstreckende, freie Schenkel 42 des Fortsatzes 40 der in Fig. 5 rechten Kassette 12 weist eine V-förmige Rinne 44 auf, die sich in Längsrichtung der Kassette 12 erstreckt. Beim Fortsatz 40 der in Fig. 5 linken Kassette 12 ist ein im wesentlichen komplementärer, ebenfalls längs verlaufender Vorsprung 46 vorgesehen, der in die Rinne 44 greift. Auf diese Weise ist ein labyrinthdichtungsartiger Eingriff der oberen Bereiche der beiden Längswände 26 der beiden benachbarten Kassetten 12 gebildet. Mit 34 ist wiederum eine Zylinder-Kolben-Einheit zum Zusammenschieben der Kassettenreihe angedeutet.

In Fig. 6 ist eine alternative Ausführungsform einer Längsleiste 36 zur Überbrückung des Längsspalts zwischen den Querseiten der Kassetten 12 und den beiden Längswänden 18 der Wanne 6 gezeichnet. Diese Längsleiste 36 besteht aus einem rinnenartig profilierten Stahlblech und ist federnd in den gezeichneten Längsspalt von oben eingesetzt. Die Querwand 28 der Kassette 12 ist ähnlich wie die Längswand 26 in Fig. 5 - grob gesprochen - U-förmig nach außen und unten abegebogen, wobei ein schräg nach unten außen verlaufender Bereich 48 vorhanden ist. Da die Längsleiste 36 einen korrespondierenden Bereich 50 aufweist, können hierdurch gewissen Breitenschwankungen des Längsspalts ausgeglichen werden. Die Längsleiste 36 kann je nach Breite des Längsspalts ein wenig tiefer oder weniger tief eingesetzt werden. Die Längsleiste 36 weist oberhalb der abgebogenen Querwand 38 einen nach oben ragenden Bereich 52 auf, der eine zusätzliche Abschirmung gegen nach außen spritzende Käserohmasse bietet.

Es versteht sich, daß die Längsleisten sowohl gemäß Fig. 4 als auch gemäß Fig. 6 nach oben abgenommen werden können, beispielsweise wenn die Kassetten 12 nach oben aus der Wanne 6 herausgehoben werden sollen.

## Patentansprüche

1. Vorrichtung (2) zum flüssigkeitsgehaltverringern den Zusammenpressen von Käserohmasse bei der Käseherstellung, mit:

(a) einer in Draufsicht im wesentlichen rechteckigen, oben offenen Wanne (6);

(b) einer Reihe von in Draufsicht im wesentlichen rechteckigen, oben offenen Kassetten (12), die sich jeweils in Querrichtung der Wanne (6) erstreckend nebeneinander in der Wanne (6) angeordnet sind;

(c) Formen (14) zur Aufnahme der zu pressenden Käserohmasse, die jeweils reihenartig in den Kassetten (12) angeordnet sind; und

(d) einem Preßkopf (10), der eine Mehrzahl von auf die Formen (14) ausgerichteten Preßstempel (24) zum Pressen der Käserohmasse in den Formen (14) aufweist,

dadurch gekennzeichnet, daß

(e) die Kassetten (12) im oberen Bereich ihrer Längsseiten eine bei gegenseitigem Kontakt spaltminimierende Randausbildung haben;

(f) eine mechanisierte Einrichtung (34) zum Zusammenschieben der Kassetten (12) in Längsrichtrung der Wanne (6) zum gegenseitigen Kontakt der Kassetten längsränder (32) vorgesehen ist; und

(g) die zwei in Längsrichtung der Wanne (6) verlaufenden Längsspalte zwischen den Querseiten der Kassetten und den Längsseiten der Wanne (6) durch Längsleisten (36) im wesentlichen abgedeckt sind.

2. Vorrichtung nach Anspruch 1,
dadurch gekennzeichnet, daß die Kassetten (12) in ihrem oberen Bereich jeweils einen Rahmen (30) aufweisen, dessen äußere Längsränder (32) eine derartige Oberflächenbeschaffenheit und Formgenauigkeit haben, daß sich die Spaltminimierung zwischen den jeweils benachbarten Kassetten (12) ergibt.

3. Vorrichtung nach Anspruch 2,
dadurch gekennzeichnet, daß die Rahmen (30) im Vertikalabschnitt plattenförmig sind.

4. Vorrichtung nach Anspruch 2 oder 3,
dadurch gekennzeichnet, daß die Rahmen (30) aus Kunststoff bestehen.

5. Vorrichtung nach einem der Ansprüche 2 bis 4,
dadurch gekennzeichnet, daß die äußeren Längsränder (32) der Rahmen (30) spangebend bearbeitet sind.

6. Vorrichtung nach Anspruch 1,
dadurch gekennzeichnet, daß die Längswände (26) der Kassetten in ihrem oberen Bereich jeweils einen im Querschnitt im wesentlichen U-förmig abgebogenen Fortsatz (40) aufweisen und daß die Fortsätze (40) benachbarter Kassetten (12) in einem labyrinthdichtungsartigen Eingriff miteinander stehen.

7. Vorrichtung nach einem der Ansprüche 1 bis 6,
dadurch gekennzeichnet, daß die Längsleisten (36) oben auf die Kassetten (12) aufgesetzte, abnehmbare Kunststoffleisten sind.

8. Vorrichtung nach einem der Ansprüche 1 bis 6,
dadurch gekennzeichnet, daß die Längsleisten (36) profilierte, von oben eingesetzte, abnehmbare Blechleisten sind.

9. Vorrichtung nach einem der Ansprüche 1 bis 8,
dadurch gekennzeichnet, daß die Zusammenschiebeinrichtung mindestens eine, in Längsrichtung der Wanne (6) wirkende Zylinder-Kolben-Einheit (34) aufweist.

## Claims

1. A device (2) for compressing curd in the production of cheese so as to reduce the liquid content thereof, comprising:
   (a) an upwardly open trough (6) of substantially rectangular configuration as seen in plan view;
   (b) a series of upwardly open cassettes (12) of substantially rectangular configuration as seen in plan view, which each extend in transverse direction of the trough (6) and which are arranged one beside the other in said trough (6);
   (c) moulds (14) for receiving the curd to be compressed, said moulds being arranged in rows in the respective cassettes (12); and
   (d) a pressing head (10) having a plurality of pressing dies (24) aligned towards the moulds (14) for compressing the curd in said moulds (14),
   characterized in that
   (e) the cassettes (12) in the upper portion of their longitudinal sides are provided with an edge configuration of gap-minimizing design upon mutual contact;
   (f) a mechanized means (34) is provided for shifting the cassettes (12) together in the longitudinal direction of the trough (6) for mutually contacting the longitudinal edges (32) of the cassettes; and
   (g) the two longitudinal gaps extending in the longitudinal direction of the trough (6) between the transverse sides of the cassettes and the longitudinal sides of the trough (6) are substantially covered by longitudinal ledges (36).

2. A device according to claim 1,
characterized in that the cassettes (12) in their upper portion each have a frame (30) whose outer longitudinal edges (32) have such surface consistency and such accuracy in shape that the gap minimization between the respectively adjacent cassettes (12) results.

3. A device according to claim 2,
characterized in that the frames (30) are plate-shaped as seen in a vertical sectional view.

4. A device according to claim 2 or 3,
characterized in that the frames (30) consist of plastics material.

5. A device according to any one of claims 2 to 4,
characterized in that the outer longitudinal edges (32) of the frames (30) are machined.

6. A device according to claim 1,
characterized in that the longitudinal walls (26) of the cassettes in their upper portion each have an extension (40) which is bent off in substantially U-shaped manner as seen in cross-section, and in that the extensions (40) of adjacent cassettes (12) are in engagement with each other in the manner of a labyrinth seal.

7. A device according to any one of claims 1 to 6,
characterized in that the longitudinal ledges (36) are detachable plastics ledges placed onto the cassettes (12) from above.

8. A device according to any one of claims 1 to 6,
characterized in that the longitudinal ledges (36) are profiled, detachable sheet metal ledges inserted from above.

9. A device according to any one of claims 1 to 8,
characterized in that the shifting-together means comprises at least one cylinder/piston unit (34) acting in the longitudinal direction of the trough (6).

**Revendications**

1. Dispositif de pressage (2) pour diminuer la quantité de liquide de caillé pendant la production du fromage, comprenant :

(a) un bac (6) ouvert vers le haut, dont la forme est sensiblement rectangulaire lorsqu'on l'observe du dessus;

(b) une rangée de cassettes (12) ouvertes vers le haut, dont la forme est sensiblement rectangulaire lorsqu'on l'observe du dessus, disposées les unes à côté des autres dans le bac (6), en s'étendant chaque fois dans la direction transversale du bac;

(c) des moules (14), pour récolter le caillé à presser, disposées chacune en deux rangées dans les cassettes (12); et

(d) une tête de pressage (10), qui présente une pluralité de poinçons de pressage (24) orientés sur les moules (14), en vue de presser le caillé dans les moules (14),

caractérisé en ce que

(e) les cassettes (12) ont, dans la zone supérieure de leurs faces longitudinales, une bordure réalisée de façon à minimiser la formation d'un interstice lors de leur mise en contact mutuelle;

(f) un dispositif mécanisé (34) est prévu, pour comprimer les cassettes (12) en direction longitudinale du bac (6), en vue de mettre en contact mutuel les bordures longitudinales (32); et

(g) les deux interstices, qui s'étendent dans la direction longitudinale du bac (6), entre les faces transversales des cassettes et les faces longitudinales du bac (6) sont pratiquement recouverts par des bandes longitudinales (36).

2. Dispositif selon la revendication 1,
caractérisé en ce que les cassettes (12) présentent chacune, dans leur zone supérieure, un cadre (30) dont les bordures longitudinales extérieures (32) ont une qualité de surface et une précision de forme telles qu'il en résulte un interstice minimal, entre deux cassettes (12) voisines.

3. Dispositif selon la revendication 2,
caractérisé en ce que les cadres (30) sont en forme de plaque, en coupe verticale.

4. Dispositif selon la revendication 2 ou 3,
caractérisé en ce que les cadres (30) sont en matière synthétique.

5. Dispositif selon l'une des revendications 2 à 4,
caractérisé en ce que les bordures longitudinales extérieures (32) des cadres (30) sont usinées avec enlèvement de matière.

6. Dispositif selon la revendication 1,
caractérisé en ce que les parois longitudinales (26) des cassettes présentent chacune, dans leur zone supérieure, un prolongement (40) replié à section transversale sensiblement en forme de U et que les prolongements (40) de cassettes (12) voisines sont en prise les uns dans les autres, à la façon d'un joint d'étanchéité labyrinthe.

7. Dispositif selon l'une des revendications 1 à 6,
caractérisé en ce que les bandes longitudinales (36) sont des bandes en matière synthétique amovibles, appliquées sur le dessus des cassettes (12).

8. Dispositif selon l'une des revendications 1 à 6,
caractérisé en ce que les bandes longitudinales (36) sont des bandes en tôle profilées amovibles, insérées par le haut.

9. Dispositif selon l'une des revendications 1 à 8,
caractérisé en ce que le dispositif de compression présente au moins un ensemble à piston et cylindre (34), agissant dans la direction longitudinale du bac (6).

# FIG. 1

# FIG. 2

# FIG. 3

# FIG. 4

# FIG. 5

# FIG. 6